# EUROPÄISCHE PATENTSCHRIFT

(11) **EP 3 775 700 B1**
(45) Veröffentlichungstag und Bekanntmachung des Hinweises auf die Patenterteilung: **02.08.2023**
(21) Anmeldenummer: 19725641.5
(22) Anmeldetag: 08.04.2019
(51) Int. Cl.: F24C 15/20

(54) **DUNSTABZUGSVORRICHTUNG MIT FILTERVORRICHTUNG**
FUME EXTRACTION DEVICE COMPRISING FILTER DEVICE
DISPOSITIF D'ÉVACUATION DE FUMÉE COMPRENANT UN DISPOSITIF DE FILTRAGE

(30) Priorität: 10.04.2018 EP 18290031
(43) Veröffentlichungstag der Anmeldung: 17.02.2021
(73) Patentinhaber: BSH Hausgeräte GmbH, 81739 München (DE)
(72) Erfinder: CHARTREL, Aurélien, 67380 Lingolsheim (FR); KLEIN, Henri, 68400 Riedisheim (FR); LAGORGETTE, Florent, 67330 Dossenheim (FR); LAURENT, Guillaume, 67870 Bischoffsheim (FR)
(86) Internationale Anmeldenummer: PCT/EP2019/000114
(87) Internationale Veröffentlichungsnummer: WO 2019/197055

(56) Entgegenhaltungen:
- EP-A1- 3 287 701
- EP-A1- 3 614 053
- EP-A2- 2 397 775
- WO-A1-2017/080781
- WO-A1-2018/036799
- DE-A1- 10 127 679
- DE-A1-102018 215 480
- US-B1- 6 455 818

## Beschreibung

Die vorliegende Erfindung bezieht sich auf eine Dunstabzugsvorrichtung mit einer Filtervorrichtung.

Bei Dunstabzugsvorrichtungen, die insbesondere in Küchen verwendet werden, ist es bekannt, Filtervorrichtungen einzusetzen, mittels derer Fett und andere Verunreinigungen aus den in die Dunstabzugsvorrichtung eingesaugten Dünsten und Wrasen ausgefiltert werden. Die Filtervorrichtungen stellen beispielsweise sogenannte Filterkassetten dar, die aus mehreren parallel übereinander angeordneten Filterlagen, insbesondere Streckmetallfilterlagen bestehen, die in einem Rahmen gehalten sind. Eine solche Filterkassette ist beispielsweise in der DE10 2013 212 921 A1 beschrieben.

Bei Dunstabzugshauben, die in der Regel an einer Raumwand oder Raumdecke montiert werden und bei denen die verunreinigte Luft daher nach oben in die Dunstabzugshaube eingesaugt wird, wird die Filterkassette so in die Ansaugöffnung eingebaut, dass diese die Fläche der Ansaugöffnung abdeckt. Es können auch mehrere Filterkassetten nebeneinander in die Ansaugöffnung eingesetzt werden. Um eine ausreichende Filterfläche zu bieten, die ein zuverlässiges Reinigen von Luft ermöglicht, ist daher bei Dunstabzugshauben daher eine große Ansaugöffnung erforderlich. Bei einer großen Ansaugöffnung muss die Dunstabzugshaube allerdings mit hoher Leistung betrieben werden, um ein zuverlässiges Ansaugen von Luft zu gewährleisten.

In der DE 101 27 679 A1 ist eine Luftfiltereinheit beschrieben, die ein Filtergehäuse mit Lufteintritt und -austritt sowie mindestens eine im Luftströmungsweg montierte Filterplatte aufweist, von einer Sprüheinheit, die eine Trägerplatte und darauf sitzende Sprühdüsen aufweist, durch zugeführte Waschflüssigkeit besprüht wird. Die Filterplatte ist im Filtergehäuse von einer aktiven Filterposition in die der Sprühdüsenträgerplatte gegenüberliegende Waschposition bewegbar.

Bei Dunstabzugsvorrichtungen, die in oder neben einem Kochfeld installiert werden und die die verunreinigte Luft damit nach unten in die Dunstabzugsvorrichtung einsaugen, ist die zur Verfügung stehende Fläche für die Ansaugöffnung hingegen gering. Auch bei dieser Art von Dunstabzugsvorrichtung, die auch als Muldenlüfter oder Downdraft-Abzug bezeichnet werden kann, ist ebenfalls eine Verwendung von plattenförmigen Filterelementen bekannt. Beispielsweise ist in der DE 20 2009 008 286 U1 eine Vorrichtung zum Abzug von Kochdünsten in unterhalb einer Kochfeldebene weisender Richtung mit einer Kochdunst-Eintrittseinrichtung beschrieben. Gemäß einer Ausführungsform ist bei dieser Vorrichtung ein plattenförmiges Filterelement in einem kanalartigen Einsatz horizontal eingebracht und der kanalartige Einsatz ist an einer Montageöffnung eingehängt. Somit ist bei dieser Ausführungsform die zur Verfügung stehende Filterfläche auf die Größe der Ansaugöffnung beschränkt und damit gering. Gemäß einer alternativen Ausführungsform ist ein plattenförmiges Filterelement in eine Aufweitung eines Abluftkanals ein plattenförmiges Filterelement schrägstehend eingebracht. Das Filterelement wird hierbei auf einem halterartigen Vorsprung eines Teils des Abluftkanals, insbesondere einer in dem Abluftkanal ausgebildeten Auffangrinne aufgesetzt. Diese Ausführungsform bietet zwar eine größere Filterfläche, ist aber von der Handhabung her ungünstig. Der Benutzer muss bei dieser Ausführungsform nämlich in den Abluftkanal durch die kleinere Ansaugöffnung greifen, um zu dem in der darunter liegenden Aufweitung stehenden Filterelement zu gelangen, wenn dieses beispielsweise zu Reinigungszwecken entnommen werden soll.

In der EP 3 287 701 A1 ist eine Filtereinheit für eine Dunstabzugsvorrichtung beschrieben, die mindestens ein Filterelement und mindestens einen Filterhalter aufweist. Die Filtereinheit zeichnet sich dadurch aus, dass der Filterhalter eine Grundplatte mit mindestens einem Griff, und mindestens ein Haltegerüst, das zu der Grundplatte geneigt angeordnet ist und mit der Grundplatte starr verbunden ist, aufweist und in jedem Haltegerüst mindestens eines der Filterelemente gehalten ist.

In der US 6,455,818 B1 ist ein Filtersystem für ein Abluftkochgerät beschrieben, das eine Filteranordnung, die direkt unter einem Luftgitter angeordnet ist, das zu einem Entlüftungsplenum führt.

In der WO 2018/036799 A1 wird eine Dunstabzugsvorrichtung mit einem Gebläse und einem Dunstabzugsgehäuse beschrieben. Die Dunstabzugsvorrichtung zeichnet sich dadurch aus, dass die Dunstabzugsvorrichtung einen Deckel und ein Trägerteil aufweist, zwischen denen der Lüfter der Dunstabzugsvorrichtung aufgenommen ist. Der Lüfter ist am Trägerteil befestigt, die Lufteintrittsöffnung befindet sich im Deckel und der Deckel ist ein Teil des Dunstabzugsgehäuses.

Schließlich ist in der WO 2017/080781 A1 eine Filtervorrichtung für eine Dunstabzugsvorrichtung mit mindestens einer Filtereinheit mit mindestens einem Filterelement beschrieben. Die Filtervorrichtung zeichnet sich dadurch aus, dass das mindestens eine Filterelement einen Filterkörper umfasst, wobei der Abstand zwischen gegenüberliegenden Außenseiten des Filterkörpers variiert und mindestens ein Hohlraum ist im Inneren des Filterkörpers ausgebildet.

Aufgabe der vorliegenden Erfindung ist es eine Lösung zu schaffen, mit der bei einfachem Aufbau der Filtervorrichtung und der Dunstabzugsvorrichtung ein zuverlässiges Ansaugen und Reinigen von Luft bei gleichzeitig geringer Leistung der Dunstabzugsvorrichtung möglich ist.

Die Aufgabe wird gelöst durch eine Dunstabzugsvorrichtung mit den Merkmalen des Anspruchs 1.

Die Filtervorrichtung weist mindestens zwei Filterelemente und mindestens einen Halterahmen auf. Als Filtervorrichtung für eine Dunstabzugsvorrichtung wird erfindungsgemäß eine bauliche Einheit bezeichnet, die an oder in eine Ansaugöffnung der Dunstabzugsvorrichtung eingesetzt werden kann und mittels derer die Luft von Verunreinigungen befreit werden kann. Zu diesem Zweck weist die Filtervorrichtung mindestens zwei Filterelemente auf. Die Filterelemente stellen vorzugsweise längliche Elemente dar. Das Filterelement kann Filtermaterial aufweisen, das in einem Filterrahmen gehalten wird. Alternativ besteht das Filterelement aus Filtermaterial und weist keinen eigenen Filterrahmen auf. Das Filtermaterial kann beispielsweise Streckmetalllagen, ein Vlies, ein Gestrick oder ein Gewirk sein. Insbesondere kann das Filtermaterial aus Draht bestehen. Zusätzlich zu den mindestens zwei Filterelementen weist die erfindungsgemäße Filtereinheit einen Halterahmen auf. Der Halterahmen dient zum Halten der Filterelemente in der Filtervorrichtung.

Erfindungsgemäß weist jedes Filterelement über dessen Fläche einen variierenden Abstand zwischen den gegenüberliegenden Außenseiten des Filterelementes auf. Die Außenseiten des Filterelementes können auch als Außenwände bezeichnet werden. Die Außenseiten, zwischen denen der Abstand variiert, sind insbesondere die Oberseite und die Unterseite des Filterkörpers. Die Oberseite bildet im eingebrachten Zustand der Filtervorrichtung in einer Dunstabzugsvorrichtung vorzugsweise die Anströmseite des Filterelementes und die Unterseite die Abströmseite, die auch als Reinluftseite bezeichnet wird. Der Abstand zwischen den Außenseiten variiert erfindungsgemäß vorzugsweise über die Breite des Filterelementes. Als Breite wird hierbei der Abstand zwischen den Längsrändern des Filterelementes verstanden. Als Länge wird der Abstand zwischen Stirnseiten des Filterelementes verstanden. Die Abmessung zwischen den Außenseiten des Filterelementes, insbesondere zwischen der Oberseite und der Unterseite des Filterelementes wird als Höhe oder Dicke des Filterelementes bezeichnet. Die Höhe kann über die Breite und/oder die Länge des Filterelementes variieren. Besonders bevorzugt variiert die Höhe des Filterelementes aber nur in der Breitenrichtung und weist über die Länge einen gleichbleibenden Querschnitt auf. Besonders bevorzugt ist die Höhe des Filterelementes, das heißt der Abstand zwischen den gegenüberliegenden Außenseiten, im mittleren Bereich der Breite des Filterkörpers größer als an den seitlichen Randbereichen der Breite.

In der Filtervorrichtung sind mindestens zwei Filterelemente vorgesehen. Sind mehr als zwei Filterelemente vorgesehen, so ist deren Anzahl vorzugsweise ein Vielfaches von zwei. Sind mehrere Filterelemente vorgesehen, so sind diese vorzugsweise so angeordnet, dass jeweils mindestens zwei Filterelemente an deren Stirnseiten aneinander anliegen. Die Filterelemente sind daher vorzugsweise in deren Längenrichtung zueinander benachbart angeordnet. Für das bessere Verständnis wird im Folgenden vorwiegend auf die bevorzugte Ausführungsform der Filtervorrichtung mit nur zwei Filterelementen eingegangen.

Erfindungsgemäß sind mindestens zwei Filterelemente zueinander geneigt angeordnet. Hierbei liegt ein Rand eines der Filterelemente zu einem Rand des anderen Filterelements benachbart. Diese Anordnung der zwei Filterelemente kann auch als V-förmige Anordnung bezeichnet werden.

Indem die Filterelemente zum Einen einen Querschnitt aufweisen, der sich über die Breite und/oder Länge des Filterelementes verändert und die Filterelemente zudem in einer V-förmigen Anordnung in der Filtervorrichtung vorliegen, kann eine Reihe von Vorteilen erzielt werden.

Zum einen kann durch die Form der Filterelemente, insbesondere durch die variierende Höhe der Filterelemente zumindest über die Breite, ein gezieltes Einstellen der Luftdurchlässigkeit der Filterelemente gegenüber einem Luftstrom, der auf eine Außenseite des Filterelementes auftrifft und an der gegenüberliegenden Außenseite des Filterelementes wieder austritt, erfolgen. Hierbei kann über die Breite des Filterelementes eine gleichbleibender Strömungswiderstand eingestellt werden oder der Strömungswiderstand über die Breite variiert werden, beispielsweise in der Mitte geringer eingestellt sein, als an den seitlichen Randbereichen. Zudem kann durch diese dreidimensionale Ausgestaltung des Filterelementes ein optimaler Druckabfall an der Filtervorrichtung erzielt werden, der so gering ist, dass eine ausreichende Strömungsgeschwindigkeit von Luft durch das Filterelement gewährleistet werden kann und der dennoch groß genug ist, dass eine ausreichende Abscheidung von Verunreinigungen an dem Filterelement gewährleistet werden kann. Durch die dreidimensionale Ausgestaltung des Filterelementes kann zudem das Volumen, in dem Verunreinigungen in dem Filterelement gespeichert werden können maximiert werden. Außer dem Speichervolumen in dem Filterelement wird durch die dreidimensionale Ausgestaltung der Filterelemente auch die Filterfläche vergrößert. Als Filterfläche wird hierbei die Fläche bezeichnet, die beim Betrieb der Dunstabzugsvorrichtung von verunreinigter Luft angeströmt werden kann. Weiterhin kann die Geometrie des Filterelementes auch der Form der Filtervorrichtung angepasst werden, indem beispielsweise der Abstand zwischen den Außenseiten des Filterelementes zumindest an den Längsrändern des Filterelementes gering ist. Dadurch ist die Größe eines Halteelementes an diesen Längsrändern gering und die Versperrung der Luft, die durch die Filtervorrichtung strömt ist gering, wodurch auch die Anforderung an die Leistung des Gebläses der Dunstabzugsvorrichtung, in der die Filtervorrichtung eingesetzt ist, verringert wird. Indem die mindestens zwei Filterelemente in einem gemeinsamen Halterahmen gehalten sind, kann die Filtervorrichtung auf einfache Weise aus der Dunstabzugsvorrichtung entnommen werden. Ein separates Entnehmen der Filterelemente aus der Dunstabzugsvorrichtung ist nicht erforderlich. Durch die erfindungsgemäße Anordnung der Filterelemente in einer V-Form in dem Halterahmen wird zusätzlich zu der Vergrößerung der Filterfläche durch die dreidimensionale Ausgestaltung der Filterelemente die Filterfläche weiter vergrößert werden, ohne, dass die Größe der Ansaugöffnung der Dunstabzugsvorrichtung vergrößert werden muss. Im Vergleich zu einem einzigen Filterelement, das schrägstehend eingesetzt ist und dennoch die gleiche Filterfläche, wie die erfindungsgemäßen zueinander geneigten Filterelemente aufweisen soll, ist bei der V-förmigen Anordnung auch der erforderliche Platzbedarf in Höhenrichtung der Dunstabzugsvorrichtung reduziert.

Somit wird bei einfachem Aufbau der Filtervorrichtung ein zuverlässiges Ansaugen und Reinigen von Luft bei gleichzeitig geringer Leistung der Dunstabzugsvorrichtung ermöglicht. Zudem ist die Handhabung der Dunstabzugsvorrichtung vereinfacht.

Gemäß einer Ausführungsform liegen die Ränder der zwei Filterelemente, die zueinander benachbart liegen, aneinander an. Die Ränder können dabei unmittelbar aneinander anliegen oder an gegenüberliegenden Seiten eines Steges mit geringer Dicke anliegen. Bei dieser Ausführungsform ist damit die Größe des Teils des Halterahmens, an dem diese Ränder gehalten werden, gering. Damit ist auch die Versperrung des Luftstroms, der durch die Filtervorrichtung strömt gering. Zudem ist dadurch auch die erforderliche Bauhöhe der Filtervorrichtung bei gegebener Größe der Ansaugöffnung und geforderter Größe der Filterfläche weiter minimiert. Wären die Ränder nämlich voneinander beanstandet, beispielsweise durch eine Platte voneinander beabstandet, so müsste der Winkel zwischen den Filterelementen kleiner gewählt werden, um die geforderte Filterfläche erzielen zu können und dennoch die Filtervorrichtung in die Ansaugöffnung einführen zu können.

Gemäß einer bevorzugten Ausführungsform stehen die zwei Filterelemente in einem Winkel von kleiner 90° und vorzugsweise von kleiner 40° zueinander. Der Winkel liegt hierbei vorzugweise zwischen den Mittellinien, die sich in Breitenrichtung der Filterelemente von einem Längsrand zum gegenüberliegenden Längsrand erstrecken, vor. Aufgrund des variierenden Abstandes zwischen den Außenseiten des Filterelementes kann der Winkel zwischen den einander zugewandten Außenseiten der beiden Filterelemente bereichsweise kleiner oder größer als der Winkel zwischen den Mittelinien der Filterelemente sein. Durch den geringen Winkel zwischen den Mittellinien der Filterelemente kann bei gegebener Größe der Ansaugöffnung die Filterfläche maximiert werden.

Gemäß einer bevorzugten Ausführungsform nimmt der Abstand zwischen den Außenseiten eines Filterelementes von einem Rand des Filterelementes in Richtung auf den gegenüberliegenden Rand von einem Minimum bis auf ein Maximum zu und zu dem anderen Rand von dem Maximum bis auf das Minimum ab. Die Ränder zwischen denen der Abstand von einem Minimum auf ein Maximum zu und wieder auf das Minimum abnimmt, sind vorzugsweise die Längsränder des Filterelementes. Die Dickenänderung liegt damit vorzugsweise in der Breitenrichtung des Filterelementes vor. Vorzugsweise liegt das Maximum der Dicke in der Mitte der Breitenrichtung. Das Filterelement kann daher beispielsweise einen ovalen Querschnitt aufweisen. Indem die Dicke des Filterelements vorzugsweise an den Rändern gering ist, kann das Filterelement auf einfache Weise an diesen Rändern in dem Halterahmen der Filtervorrichtung gehalten werden. Insbesondere ist nur ein Teil des Halterahmens mit geringer Größe erforderlich um die dünnen Ränder zu halten. Hierdurch wird die Versperrung der Luft weiter reduziert. Da aber dennoch über die Breite des Filterelementes eine größere Dicke vorliegt, ist das Speichervolumen des Filterelementes weiterhin groß.

Gemäß einer bevorzugten Ausführungsform weist das Filterelement einen rautenförmigen Querschnitt auf. Diese Ausführungsform weist zu den genannten Vorteilen der auf ein Maximum ansteigenden Dicke des Filterelementes insbesondere den Vorteil auf, dass das Filterelement auf einfache Weise hergestellt und durch einfache Mittel, beispielsweise Schienen, an den Längsrändern in dem Halterahmen zuverlässig gehalten werden kann.

Gemäß einer Ausführungsform weist der der Halterahmen zwei Stirnwände auf, die an Stirnseiten der mindestens zwei Filterelemente anliegen, und zwischen den Stirnwänden verlaufen Schienen des Halterahmens. Als Schienen werden hierbei Teile des Halterahmens bezeichnet, die eine längliche Rinnenform aufweisen. Die Schienen dienen daher jeweils zur Aufnahme eines Randes, insbesondere Längsrandes der Filterelemente. Die Stirnwände und Schienen bestehen vorzugsweise aus Kunststoff oder Metall. Die Stirnwände begrenzen den Raum, der zwischen den zueinander geneigt angeordneten Filterelementen gebildet ist, an den Längsenden der Filterelemente. Die Stirnwände bilden daher vorzugsweise eine dreieckige Fläche oder trapezförmige Fläche. Die Filterelemente können an den Stirnwänden befestigt sein. Es liegt aber auch im Rahmen der Erfindung, dass die Filterelemente nur an den Schienen befestigt sind, beispielsweise in den Schienen aufgenommen sind, und die Schienen an den Stirnwänden befestigt sind. Zusätzlich zu den Schienen können zwischen den Stirnwänden Streben vorgesehen sein, die sich senkrecht zu den Schienen erstrecken und diese miteinander verbinden. Indem der Halterahmen zumindest durch Stirnwänden und Schienen gebildet ist, weist dieser eine Stabilität auf. Die Filterelemente, die in diesem Halterahmen gehalten werden, können daher einfach aufgebaut sein. Beispielsweise können die Filterelemente ausschließlich aus Filtermaterial bestehen und insbesondere keinen separaten Filterrahmen aufweisen. Beispielsweise können die Filterelemente aus Filterlagen gebildet sein, die durch die Schienen des Halterahmens an den Rändern zusammengehalten werden.

Gemäß einer bevorzugten Ausführungsform ist an den Stirnwänden jeweils ein Griff ausgebildet. Der Griff kann an einem Rand der Stirnfläche ausgebildet sein. Beispielsweise kann bei einer trapezförmigen Stirnwand der Griff an dem längeren parallelen Rand des Trapezes angebracht oder angeformt sein. Bei dieser Ausführungsform muss die Filtervorrichtung in die Dunstabzugsvorrichtung so tief eingebracht werden können, dass der Griff im eingebrachten Zustand nicht über die Ansaugöffnung nach oben steht.

Gemäß einer bevorzugten Ausführungsform ist aber an der Seite jeder der Stirnwände, die den Schienen und damit der anderen Stirnwand zugewandt ist, jeweils ein Griff ausgebildet, der sich in die Längsrichtung der Schienen erstreckt. Als sich in die Längsrichtung der Schienen erstreckend wird hierbei ein Griff bezeichnet, der über die Fläche der Stirnwand in dieser Richtung vorsteht. Der Griff ist daher vorzugsweise als Vorsprung ausgebildet. Der Griff kann beispielsweise die Form eines Teilkreises aufweisen. Wenn die Stirnwand aus Metall beispielsweise aus einem Blech besteht, kann der Griff durch Prägen eingebracht sein. Bei einer Stirnwand aus Kunststoff kann der Griff beispielsweise bei der Herstellung durch Spritzguss erzeugt werden. Indem an der Innenseite jeder der Stirnwände ein Griff angebracht ist, kann die Filtervorrichtung auf einfache Weise aus der Dunstabzugsvorrichtung und insbesondere aus der Ansaugöffnung entnommen werden.

Gemäß einer Ausführungsform weist der Halterahmen eine erste Schiene auf, in der die Ränder der mindestens zwei Filterelemente gehalten sind, die zueinander benachbart sind, und weist zwei zweite Schienen auf, in denen die gegenüberliegenden voneinander beabstandeten Ränder der zwei Filterelemente gehalten sind. Ein Vorteil dieser Ausführungsform ist, dass die Ränder der Filterelemente abschlossen sind und das Filtermaterial damit sicher gehalten ist. Somit können beispielsweise Streckmetallfilterlagen, Drahtgewirk oder Drahtgeflecht als Filtermaterial verwendet werden und kann ohne separaten Filterrahmen sicher in dem Halterrahmen gehalten werden.

Gemäß einer weiteren Ausführungsform weist die erste Schiene einen in Längsrichtung verlaufenden Steg auf, an dem an gegenüberliegenden Seiten die Ränder der zwei Filterelemente, die zueinander benachbart sind, anliegen. Indem sich die Filterelemente hierbei nicht direkt aneinander abstützen sondern an dem Steg, der in der ersten Schiene ausgebildet ist, wird die Stabilität der Filtervorrichtung gesteigert.

Der Halterahmen kann aus mehreren Teilen bestehen. Insbesondere können die Schienen zu den Stirnwänden separat vorliegen. Bei dieser Ausführungsform können die Teile des Halterahmens beispielsweise aus Metall, insbesondere aus Blech bestehen. Die Teile können beispielsweise über Schrauben miteinander verbunden sein. Gemäß einer bevorzugten Ausführungsform ist der Halterahmen aber einteilig ausgebildet. Bei dieser Ausführungsform besteht der Halterahmen beispielsweise aus Kunststoff und kann durch Spritzguss hergestellt sein. Der Halterrahmen kann aber auch bei der einteiligen Ausgestaltung aus Metall bestehen und beispielsweise durch Biegen und Stanzen hergestellt sein. Der Vorteil eines einteiligen Halterahmens besteht in der vereinfachten Herstellung und der höheren Stabilität der Filtervorrichtung.

Zur weiteren Steigerung der Stabilität der Filtervorrichtung kann zumindest ein Filterelement ein Stützelement aufweisen, das sich in Längsrichtung des Filterelementes in dessen Inneren erstreckt. Das Stützelement kann beispielsweise ein Rohr darstellen und erstreckt sich vorzugsweise über die gesamte Länge des Stützelementes. An den Längsenden des Stützelementes kann dieses an den Stirnwänden der Filtervorrichtung verschraubt werden. Hierzu kann an jeder Stirnwand von außen eine Schraube durch die Stirnwand geführt werden und in das Längsende des rohrförmigen Stützelementes geschraubt werden.

Die Dunstabzugsvorrichtung weist ein Dunstabzugsgehäuse mit einer Ansaugöffnung in der Oberseite des Dunstabzugsgehäuses und ein Gebläse auf, das zu der Ansaugöffnung nach unten versetzt angeordnet.

Vorteile und Merkmale, die bezüglich der erfindungsgemäß verwendeten Filtervorrichtung beschrieben werden, gelten - soweit anwendbar - auch für die erfindungsgemäße Dunstabzugsvorrichtung und umgekehrt.

Als Dunstabzugsvorrichtung wird eine Vorrichtung bezeichnet, mittels derer Dünste und Wrasen, insbesondere in einer Küche, eingesaugt und gereinigt werden können. Insbesondere stellt die Dunstabzugsvorrichtung eine Vorrichtung dar, bei der in die Ansaugöffnung der Dunstabzugsvorrichtung eingesaugte Dampf und / oder Wrasen nach unten geleitet und dort durch mindestens eine Filtervorrichtung gereinigt wird.

Die Dunstabzugsvorrichtung kann einen so genannte Muldenlüfter dar. Als Muldenlüfter wird eine Dunstabzugsvorrichtung bezeichnet, bei der die Ansaugöffnung benachbart zu Kochfeld oder in einer Aussparung des Kochfeldes in der Horizontalen liegt. An diese Ansaugöffnung schließt sich nach unten ein Gehäuse der Dunstabzugsvorrichtung an, in der die mindestens eine Filtervorrichtung vorgesehen ist, über die die Dünste und Wrasen gereinigt werden. Das Innere des Gehäuses ist über die Ansaugöffnung von oben zugänglich. An dem Gehäuse der Dunstabzugsvorrichtung ist eine Abluftöffnung vorgesehen, die über weitere Kanalelemente mit dem Gebläse der Dunstabzugsvorrichtung verbunden ist. Über die Abluftöffnung wird die durch die Filtervorrichtung gereinigte Luft aus dem Gehäuse ausgegeben. Die Abluftöffnung kann daher auch als Reinluftöffnung bezeichnet werden.

Bei einem Muldenlüfter steht der gesamte Innenraum des Gehäuses, das sich an die Ansaugöffnung anschließt, zur Aufnahme einer Filtervorrichtung zur Verfügung. Zudem ist bei einem Muldenlüfter die Ansaugöffnung in der Höhe des Kochfeldes oder dazu leicht nach oben versetzt vorgesehen und die Filtervorrichtung ist zu der Ansaugöffnung nach unten versetzt. Somit können Partikel, die aus der Filtervorrichtung und insbesondere den Filterelementen herausfallen, nicht auf das Kochfeld fallen, wie dies bei einer über dem Kochfeld angeordneten Dunstabzugshaube der Fall ist. Somit kann als Filtermaterial für das Filterelement beispielsweise auch Metallgestrick oder Metallgewirk verwendet werden, obwohl es bei diesem Filtermaterial teilweise zum Ablösen von Metallfasern kommen kann. Weiterhin kann bei einem Muldenlüfter der Halterahmen auf einfache Weise zum Sammeln von Verunreinigungen verwendet werden. Schließlich ist bei einem Muldenlüfter das Innere des Gehäuses der Dunstabzugsvorrichtung einfach zugänglich, so dass die in dem Gehäuse aufgenommene Filtervorrichtung auf einfache Weise entnommen und nach einer Reinigung wieder eingebracht werden kann.

Bei der erfindungsgemäßen Dunstabzugsvorrichtung weist diese ein Dunstabzugsgehäuse mit einer Ansaugöffnung in der Oberseite des Dunstabzugsgehäuses auf. Die Ansaugöffnung weist vorzugsweise einen rechteckigen Querschnitt auf, der geringfügig größer ist, als die Breite und Länge der Dunstabzugsvorrichtung.

Richtungsangaben wie oben und unten beziehen sich auf die Dunstabzugsvorrichtung und deren Teile in einem montierten Zustand, in dem die Ansaugöffnung in der Horizontalen liegt.

Das Gebläse der Dunstabzugsvorrichtung ist zu der Ansaugöffnung nach unten versetzt angeordnet. Das Gebläse ist insbesondere über das Dunstabzugsgehäuse und gegebenenfalls daran angeschlossene Kanalelemente strömungstechnisch mit dem Gebläse verbunden. Somit wird durch den durch das Gebläse erzeugten Unterdruck Luft über die Ansaugöffnung nach unten eingesogen und strömt von oben in das Dunstabzugsgehäuse. Die Dunstabzugsvorrichtung weist mindestens eine erfindungsgemäße Filtervorrichtung auf. Die Filtervorrichtung liegt vorzugsweise in der Nähe der Ansaugöffnung in dem Dunstabzugsgehäuse. Hierdurch ist die Filtervorrichtung auf einfache Weise von oben durch die Ansaugöffnung für den Benutzer erreichbar. Besonders bevorzugt wird die Filtervorrichtung in dem Dunstabzugsgehäuse durch eine Haltegeometrie, die an zwei Wänden des Dunstabzugsgehäuses vorgesehen ist gehalten. Die Haltegeometrie kann durch einen oder mehrere Vorsprünge beispielsweise einen oder mehrere Materialstreifen, die sich von den Wänden nach innen in das Dunstabzugsgehäuse erstrecken, gebildet sein.

Erfindungsgemäß ist die Filtervorrichtung so in dem Dunstabzugsgehäuse eingebracht ist, dass die Ränder der Filterelemente, die zueinander benachbart sind, der Ansaugöffnung abgewandt sind. Die v-förmige Filtervorrichtung ist somit so in das Dunstabzugsgehäuse eingebracht, dass die Spitze der V-Form nach unten weist. Durch diese Anordnung der Filtervorrichtung wird die angesaugte Luft in den Raum, der zwischen den zueinander geneigten Filterelementen und den vorzugsweise vorgesehenen Stirnwänden gebildet ist, eingesaugt. Die Schiene, in der die Ränder der zwei Filterelemente zueinander benachbart sind, dient hierbei auch zum Auffangen von abgeschiedenen Verunreinigungen, wie Fett. Die Filterfläche der beiden Filterelemente wird vollständig von der angesaugten Luft angeströmt.

Gemäß einer bevorzugten Ausführungsform weitet sich das Dunstabzugsgehäuse von der Ansaugöffnung zumindest bereichsweise nach unten auf. Hierbei kann sich an die Ansaugöffnung zunächst ein Kanalstück des Dunstabzugsgehäuses mit konstantem Querschnitt über dessen Höhe anschließen. Das erste Kanalstück weist vorzugsweise einen rechteckigen Querschnitt auf. An dieses Kanalstück kann sich dann ein Bereich des Dunstabzugsgehäuses mit größer werdendem Querschnitt über die Höhe des Bereichs anschließen. Nach diesem Aufweitungsbereich kann sich ein weiteres Kanalstück mit konstantem Querschnitt über dessen Höhe anschließen. Der Querschnitt des zweiten, weiter unten liegenden Kanalstück ist dabei größer als der Querschnitt des ersten an die Ansaugöffnung angrenzenden Kanalstücks. Auch das zweite Kanalstück weist vorzugsweise einen rechteckigen Querschnitt auf. An der Unterseite des zweiten unteren Kanalstücks kann diese verschlossen sein, das heißt einen Boden aufweisen. An einer Seite des zweiten Kanalstücks ist vorzugsweise eine Abluftöffnung des Dunstabzugsgehäuses eingebracht, über die Luft über weitere Kanäle zu dem Gebläse gelangen kann. Vorzugsweise ist die Abluftöffnung in der Rückseite des Dunstabzugsgehäuses eingebracht. Als Rückseite wird die Seite bezeichnet, die dem Benutzer der Dunstabzugsvorrichtung abgewandt ist. Bei dieser Ausführungsform kann die Dunstabzugsvorrichtung beispielsweise zwischen an einem oder beiden Seitenändern eines Kochfeldes angeordnet sein. Alternativ kann die Dunstabzugsvorrichtung beispielsweise auch zwischen zwei separaten Kochfeldern in Tiefenrichtung der Kochfelder liegen oder in einer Aussparung in dem Kochfeld, die sich in Tiefenrichtung in der Mitte der Breite des Kochfeldes erstreckt, eingebracht sein.

Die Filtervorrichtung liegt vorzugsweise zumindest bereichsweise in dem aufgeweiteten Bereich. Besonders bevorzugt ist die Filtervorrichtung so angeordnet, dass die Ränder der zwei Filterelemente, die zu einander beabstandet liegen, das heißt die oberen Ränder in dem ersten oberen Kanalstück liegen und dort an den Innenseiten von zwei gegenüberliegenden Wänden des Dunstabzugsgehäuses anliegen. An den zwei weiteren Wänden des vorzugsweise rechteckigen ersten Kanalstücks liegen die Stirnwände der Filtervorrichtung an. Da die Filterelemente zueinander geneigt sind und die unteren Längsränder der Filterelemente aneinander anliegen, nimmt der Abstand zwischen dem Filterelement und der Wand des Kanalstückes, an dem diese anliegt, zu. Zusätzlich liegt der Bereich der Aufweitung des Dunstabzugsgehäuses in einer Höhe, in der auch ein Teil der Filterelemente der Filtervorrichtung liegen. Insbesondere weitet sich der Querschnitt des Dunstabzugsgehäuses an den Wänden auf, an denen die Filterelemente in dem ersten Kanalstück anliegen. Hierdurch nimmt der Abstand zwischen Filterelement und Wand des Dunstabzugsgehäuses zusätzlich zu der Zunahme durch die geneigte Anordnung der Filterelemente auch durch die Aufweitung des Dunstabzugsgehäuses zu. Hierdurch kann eine gleichmäßige Luftströmung in dem Dunstabzugsgehäuse gewährleistet werden und ein zuverlässiges Durchströmen der Filterelemente realisiert werden. Insbesondere kann eine Aufstauung von Luft, die durch einen zu geringen Abstand zwischen Filterelement und Wand des Dunstabzugsgehäuses auftreten könnte, bei der bevorzugten Ausführungsform des Dunstabzugsgehäuses nicht auftreten. Zudem wird die Geräuschentwicklung in dem Dunstabzugsgehäuse durch die Aufweitung des Dunstabzugsgehäuses verringert.

Gemäß einer besonders bevorzugten Ausführungsform ist der Aufweitungsbereich zwischen dem ersten und dem zweiten Kanalstück und auch die Übergange von erstem Kanalstück zu Aufweitungsbereich und von Aufweitungsbereich zu zweitem Kanalstück durch gekrümmte Flächen gebildet. Besonders bevorzugt ist auch der Übergang von dem zweiten Kanalstück zu dem Boden des Dunstabzugsgehäuses abgerundet. Hierdurch entstehen keine Kanten oder Absätze zwischen den Bereichen des Dunstabzugsgehäuses. Dadurch kann das Absetzen von Verunreinigungen verhindert werden und das Dunstabzugsgehäuse kann einfach gereinigt werden.

Gemäß einer bevorzugten Ausführungsform weist die Ansaugöffnung einen rechteckigen, länglichen Querschnitt auf und weist eine Breite von 150mm auf. Bei herkömmlichen Muldenlüftern ist die Breite der Ansaugöffnung in der Regel auf 100mm beschränkt. Indem erfindungsgemäß vorzugsweise eine Ansaugöffnung mit größerer Breite, insbesondere 150mm vorgesehen ist, kann zum einen die Filterfläche der Filtervorrichtung bei vorgegebener Höhe des Dunstabzugsgehäuses maximiert werden. Die Höhe des Dunstabzugsgehäuses ist insbesondere durch weitere Einbauten, die unterhalb der Dunstabzugsvorrichtung in einer Küchenanordnung vorgesehen sind, beispielsweise Schubladen eines Küchenschrankes, beschränkt. Zudem ist durch die breitere Ansaugöffnung auch deren Querschnitt größer und somit wird auch hierdurch die Geräuschentwicklung weiter minimiert.

Die Erfindung wird im Folgenden erneut unter Bezugnahme auf die beiliegenden Figuren erläutert. Es zeigen:
Figur 1: eine schematische, perspektivische Schnittansicht einer Ausführungsform der erfindungsgemäßen Dunstabzugsvorrichtung mit einer ersten Ausführungsform der erfindungsgemäß verwendeten Filtervorrichtung;
Figur 2: eine weitere schematische, perspektivische Schnittansicht der Ausführungsform der erfindungsgemäßen Dunstabzugsvorrichtung nach Figur 1;
Figur 3: eine schematische Perspektivansicht der ersten Ausführungsform der Filtervorrichtung nach Figur 1;
Figur 4: eine schematische Perspektivansicht einer zweiten Ausführungsform der erfindungsgemäßen Filtervorrichtung; und
Figur 5: eine schematische Schnittansicht der zweiten Ausführungsform der Filtervorrichtung nach Figur 4.

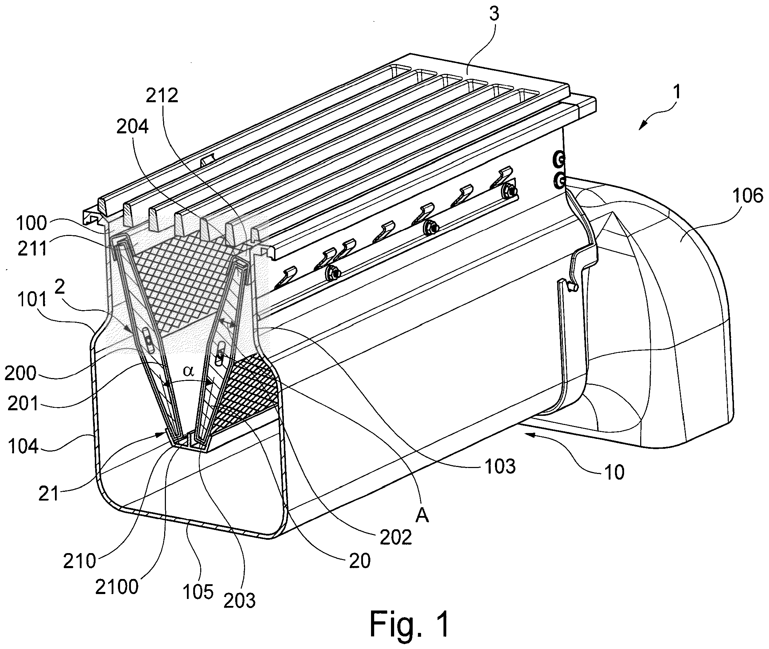

In Figur 1 ist eine schematische, perspektivische Schnittansicht einer Ausführungsform der erfindungsgemäßen Dunstabzugsvorrichtung 1 mit einer ersten Ausführungsform der erfindungsgemäß verwendeten Filtervorrichtung 2 gezeigt. Die Dunstabzugsvorrichtung 1 umfasst ein Dunstabzugsgehäuse 10 und eine Filtervorrichtung 2. Zusätzlich umfasst die Dunstabzugsvorrichtung 1 ein Gebläse, das in der Figur 1 nicht gezeigt ist, vorzugsweise aber zu dem Dunstabzugsgehäuse 10 nach unten versetzt liegt.

Das Dunstabzugsgehäuse 10 weist eine längliche Form auf. Im montierten Zustand liegt das Dunstabzugsgehäuse 10 parallel zu einem Rand eines Kochfeldes (nicht gezeigt). Besonders bevorzugt ist das Dunstabzugsgehäuse 10 zwischen zwei Kochfeldern (nicht gezeigt) angeordnet und erstreckt sich in Tiefenrichtung der Kochfelder. Alternativ kann das Dunstabzugsgehäuse 10 auch in einer sich in Tiefenrichtung des Kochfeldes eingebrachten Aussparung eingebracht sein.

In der Oberseite des Dunstabzugsgehäuses 10 weist dieses eine Ansaugöffnung 100 auf. Die Ansaugöffnung 100 weist einen rechteckigen Querschnitt auf. An die Ansaugöffnung 100 schließt sich nach unten ein erstes Kanalstück 103 an, das einen rechteckigen Querschnitt entsprechend dem Querschnitt der Ansaugöffnung 100 aufweist und dessen Querschnitt über die Höhe des ersten Kanalstücks 103 konstant ist. Nach unten schließt sich an das erste Kanalstück 103 eine Aufweitung 101 des Dunstabzugsgehäuses 10 an. Über die Höhe dieser Aufweitung 101 nimmt die Breite des Dunstabzugsgehäuses 10 zu. An die Aufweitung 101 schließt sich ein zweites Kanalstück 104 an. Das zweite Kanalstück 104 weist einen über dessen Höhe konstanten Querschnitt auf und ist nach unten durch einen Boden 105 verschlossen. An der rückwärtigen Wand des Dunstabzugsgehäuses 10 ist ein Kanal 106 angeschlossen, über den Luft zu dem Gebläse der Dunstabzugsvorrichtung 1 gelangen kann. Der Kanal 106 ist nach gekrümmt und leitet daher die Luft nach unten.

Die Ansaugöffnung 100 liegt im montierten Zustand der Dunstabzugsvorrichtung 1 in der Ebene des oder der Kochfelder (nicht gezeigt). In der dargestellten Ausführungsform ist die Ansaugöffnung 100 durch ein Gitter 3 abgedeckt. Es ist aber auch möglich die Ansaugöffnung 100 in dem Zustand, in dem die Dunstabzugsvorrichtung 1 nicht betrieben wird durch ein anderes Abdeckelement, beispielsweise eine Platte oder Klappe zu verschließen.

In das Dunstabzugsgehäuse 10 ist eine Filtervorrichtung 2 eingebracht.

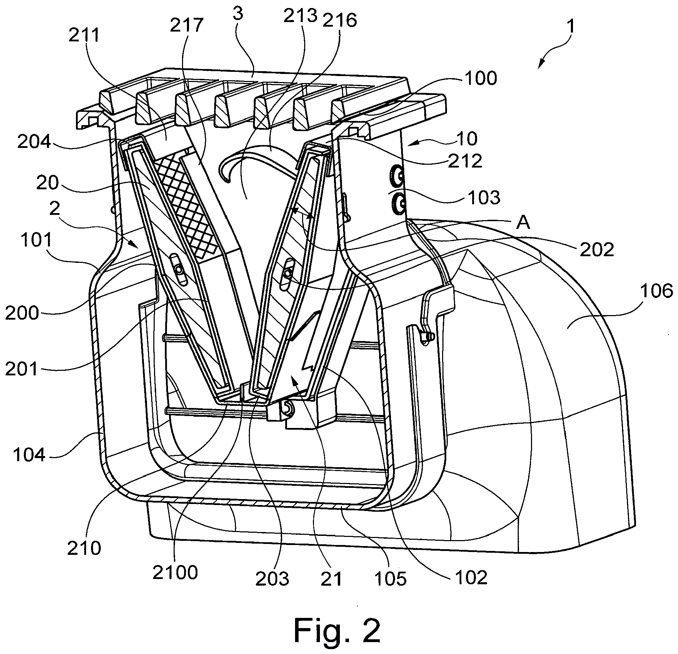

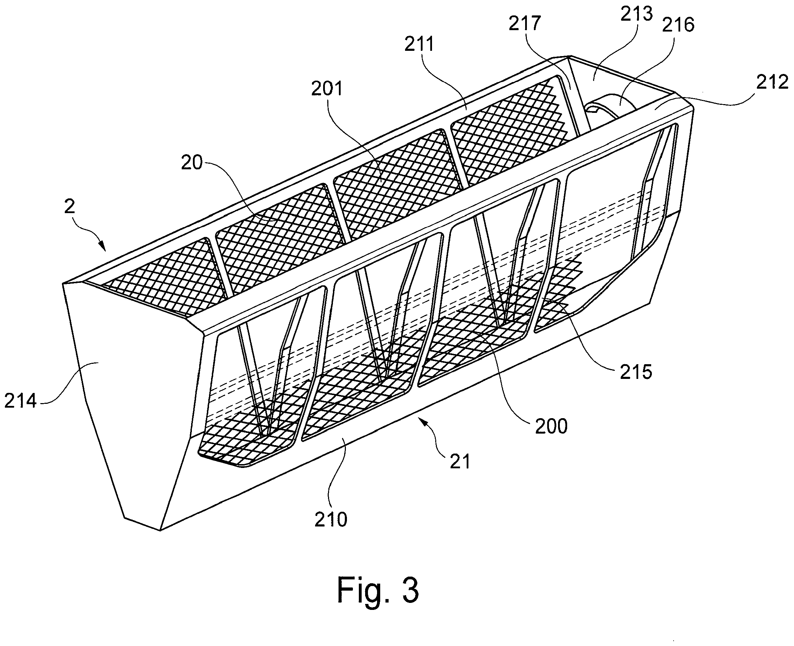

Die Filtervorrichtung 2, die auch in den Figuren 2 und 3 genauer dargestellt ist, besteht aus zwei Filterelementen 20 und einem Halterahmen 21.

Die zwei Filterelemente 20 sind in dem Halterahmen 21 gehalten. Jedes der Filterelement 20 weist über dessen Fläche einen variierenden Abstand A zwischen den gegenüberliegenden Außenseiten 200, 201 des Filterelementes 20 auf. Insbesondere weisen die Filterelemente 20 in der gezeigten Ausführungsform einen rautenförmigen Querschnitt auf. Die zwei Filterelemente 20 sind zueinander geneigt angeordnet und ein Rand 203, der auch als unterer Längsrand bezeichnet werden kann, eines der Filterelemente 20 liegt zu einem weiteren Rand 203 des anderen Filterelements 20 benachbart. Die beiden Filterelemente 20 bilden somit eine V-Form. In der gezeigten Ausführungsform ist in jedem Filterelement 20 ein Stützelement 202 vorgesehen, das sich in der Mitte der Filterelemente 20 in deren Längsrichtung erstreckt. Die Stützelemente 202 können Stangen oder Rohre sein.

Der Halterahmen 21 besteht aus einer ersten Schienen 210 und zwei zweiten Schienen 211, 212. In der gezeigten Ausführungsform sind die unteren Längsränder 203 der beiden Filterelemente 20 in einer ersten Schiene 210 gehalten. Die Schiene 210 weist zudem einen Steg 2100 auf, der sich in der Längsrichtung der Schiene 210 erstreckt und in deren Mitte liegt. Somit liegen die beiden Filterelemente 20 mit deren unteren Rändern 203 an gegenüberliegenden Seiten des Stegs 2100 in der ersten Schiene 210 an. Die zweiten Schienen 211, 212 verlaufen an den oberen Längsrändern 204 der Filterelemente 20, das heißt die oberen Ränder 204 sind jeweils in einer der zweiten Schienen 211, 212 des Halterahmens 21 aufgenommen. An den Längsenden weist der Halterahmen Stirnwände 213, 214 auf, die jeweils eine Trapezform aufweisen. Die Schienen 210, 211, 212 liegen mit deren Längsenden an den Stirnwänden 213, 214 an und sind vorzugsweise an diesen befestigt oder mit diesen einteilig ausgestaltet.

Wie sich aus Figuren 2 und 3 ergibt, ist an der Innenseite der Stirnwand 213 ein Griff 216 vorgesehen, der in der dargestellten Ausführungsform eine Teilkreisform aufweist. Auch an der Stirnwand 214 ist vorzugsweise an der Innenseite ein Griff vorgesehen, der in den Figuren nicht sichtbar ist. Zudem weist die Filtervorrichtung 2 in der gezeigten Ausführungsform Stützwände 217 auf, die sich von den Stirnwänden 213, 214 aus nach innen erstrecken und an den Stirnenden der Filterelemente 20 über die Breite der Filterelemente 20 an den Außenseiten 200, 201 der Filterelemente 20 anliegen. Die Stützwände verlaufen damit senkrecht zu den Schienen 210, 211, 212.

Zudem weist der Halterahmen 21 zwischen den zweiten Schienen 211, 212 und der ersten Schiene 210 verlaufende Streben 215 auf. Diese erstrecken sich senkrecht zu den Schienen 211, 212, 210 und weisen eine geringe Breite auf. Die Streben 215 dienen dem zusätzlichen Halt der Filterelemente 20 und insbesondere des Filtermaterials.

Die Filtervorrichtung 2 ist so in das Dunstabzugsgehäuse 10 eingebracht, dass die Spitze der V-Form nach unten gerichtet ist. Insbesondere liegen dabei die zweiten Schienen 211, 212 des Halterahmens 21 in der Nähe der Ansaugöffnung 100 in dem ersten Kanalstück 103 des Dunstabzugsgehäuses 10. Die erste Schiene 210 liegt zu den zweiten Schienen 211, 212 nach unten versetzt. In der gezeigten Ausführungsform liegt die erste Schiene 210 und damit die Unterseite der Filtervorrichtung 2 in dem Bereich des zweiten Kanalstückes 104 des Dunstabzugsgehäuses 10.

Wie sich aus Figur 2 ergibt ist in der gezeigten Ausführungsform an den Stirnwänden des Dunstabzugsgehäuses 10 eine Haltegeometrie 102 ausgebildet, die sich von der Stirnwand des Dunstabzugsgehäuses 10 nach innen erstreckt und die die Filtervorrichtung 2 an deren Längsenden von unten stützt. Insbesondere stellt die Haltegeometrie 102 daher einen v-förmigen Materialstreifen dar.

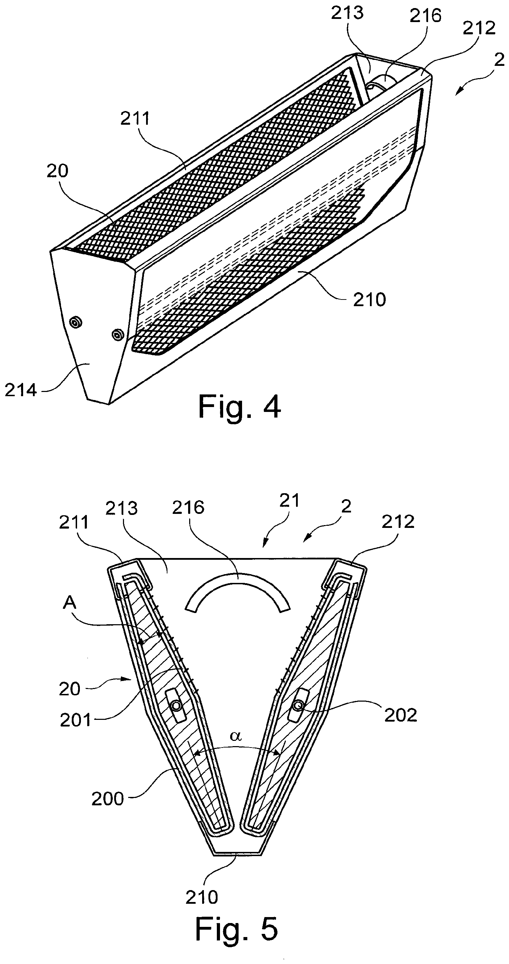

Die Figuren 4 und 5 zeigen eine zweite Ausführungsform der erfindungsgemäßen Filtervorrichtung 2. Diese Ausführungsform unterscheidet sich von der in Figuren 1 bis 3 gezeigten Ausführungsform lediglich dadurch, dass die Schienen 210, 211 und 212 zu den Stirnwänden 213, 214 separate Bauteile darstellen. Bei dieser Ausführungsform sind die Schienen 210, 211, 212 so ausgestaltet, dass an deren offenen Seite nach innen gerichtete Abkantungen vorgesehen sind, die in das Filtermaterial der Filterelemente 20 eingreifen und damit an dem Filtermaterial befestigt sind. Bei der ersten Schiene 210 ist zudem im Unterschied zu der ersten Ausführungsform kein Steg vorgesehen. Die Abkantungen der unteren Schiene 210, die an deren Oberen Rändern vorgesehen sind, greifen jeweils auf eine Außenseite 200, die die Reinluftseite der Filterelemente 20 bildet, ein. Die Stirnwände 213, 214 sind in der zweiten Ausführungsform der Filtervorrichtung 2 mit den Filterelementen 20 durch Schrauben verbunden (siehe Figur 4). Die Schraube ragt durch die Stirnwand 213 oder 214 hindurch und greift in das Längsende des Stützelementes 202 des Filterelementes 20, das ein Rohr darstellt ein. Hierdurch bildet die Filtervorrichtung 2 eine Baueinheit und kann als Ganzes in das Dunstabzugsgehäuse 10 einer Dunstabzugsvorrichtung 1 eingebracht und entnommen werden.

Die vorliegende Erfindung weist eine Reihe von Vorteilen auf. Insbesondere kann durch die Kombination einer V-Förmigen Anordnung von Filterelementen und der dreidimensionalen Ausgestaltung der Filterelemente, insbesondere einer Rautenform, die Filterfläche, über die Dünste und Wrasen gefiltert werden können maximiert werden.

### Bezugszeichen

- 1: Dunstabzugsvorrichtung
- 10: Dunstabzugsgehäuse
- 100: Ansaugöffnung
- 101: Aufweitung
- 102: Haltegeometrie
- 103: erstes Kanalstück
- 104: zweites Kanalstück
- 105: Boden
- 106: Kanal

- 2: Filtervorrichtung
- 20: Filterelement
- 200: Außenseite
- 201: Außenseite
- 202: Stützelement
- 203: Rand
- 204: Rand

- 21: Halterahmen
- 210: erste Schiene
- 2100: Steg
- 211: zweite Schiene
- 212: zweite Schiene
- 213: Stirnwand
- 214: Stirnwand
- 215: Strebe
- 216: Griff
- 217: Stützwand

- 3: Gitter
- A: Abstand
- α: Neigungswinkel

## Patentansprüche

1. Dunstabzugsvorrichtung, die ein Dunstabzugsgehäuse (10) mit eine Ansaugöffnung (100) in der Oberseite des Dunstabzugsgehäuses (10) und ein Gebläse aufweist, das zu der Ansaugöffnung (100) nach unten versetzt angeordnet ist, wobei die Dunstabzugsvorrichtung eine Filtervorrichtung für die Dunstabzugsvorrichtung (1) aufweist, die mindestens zwei Filterelemente (20) und mindestens einen Halterahmen (21) zum Halten der mindestens zwei Filterelemente (20) umfasst, wobei die mindestens zwei Filterelemente (20) zueinander geneigt angeordnet sind und ein Rand (203) eines der Filterelemente (20) zu einem Rand (203) des anderen Filterelements (20) benachbart liegt und wobei die Filtervorrichtung (2) so in dem Dunstabzugsgehäuse (10) eingebracht ist, dass die Ränder (203) der Filterelemente (20), die zueinander benachbart sind, der Ansaugöffnung (100) abgewandt sind,
**dadurch gekennzeichnet, dass**
jedes Filterelement (20) über dessen Fläche einen variierenden Abstand (A) zwischen den gegenüberliegenden Außenseiten (200, 201) des Filterelementes (20) aufweist.

2. Dunstabzugsvorrichtung nach Anspruch 1, **dadurch gekennzeichnet, dass** die Ränder (203) der zwei Filterelemente (20), die zueinander benachbart liegen, aneinander anliegen.

3. Dunstabzugsvorrichtung nach einem der Ansprüche 1 oder 2, **dadurch gekennzeichnet, dass** die zwei Filterelemente (20) in einem Winkel (α) von kleiner 90° und vorzugsweise von kleiner 40° zueinander stehen.

4. Dunstabzugsvorrichtung nach einem der Ansprüche 1 bis 3, **dadurch gekennzeichnet, dass** der Abstand (A) zwischen den Außenseiten (200, 201) eines Filterelementes (20) von einem Rand (203) des Filterelementes (20) in Richtung auf den gegenüberliegenden Rand (204) von einem Minimum bis auf ein Maximum zunimmt und zu dem anderen Rand (204) von dem Maximum bis auf das Minimum abnimmt und vorzugsweise, dass das Filterelement (20) einen rautenförmigen Querschnitt aufweist.

5. Dunstabzugsvorrichtung nach einem der Ansprüche 1 bis 4, **dadurch gekennzeichnet, dass** der Halterahmen (21) zwei Stirnwände (213, 214) aufweist, die an Stirnseiten der mindestens zwei Filterelemente (20) anliegen, und zwischen den Stirnwänden (213, 214) Schienen (210, 211, 212) des Halterahmens (21) verlaufen.

6. Dunstabzugsvorrichtung nach Anspruch 5, **dadurch gekennzeichnet, dass** an der Seite jeder der Stirnwände (213, 214), die den Schienen (210, 211, 212) zugewandt ist, ein Griff (216) ausgebildet ist, der sich in die Längsrichtung der Schienen (210, 211, 212) erstreckt.

7. Dunstabzugsvorrichtung nach einem der Ansprüche 5 oder 6, **dadurch gekennzeichnet, dass** der Halterahmen (21) eine erste Schiene (210) aufweist, in der die Ränder (203) der mindestens zwei Filterelemente (20) gehalten sind, die zueinander benachbart sind, und zwei zweite Schienen (211, 212) aufweist, in denen die gegenüberliegenden voneinander beabstandeten Ränder (204) der zwei Filterelemente (20) gehalten sind.

8. Dunstabzugsvorrichtung nach Anspruch 7, **dadurch gekennzeichnet, dass** die erste Schiene (210) einen in Längsrichtung verlaufenden Steg (2100) aufweist, an dem an gegenüberliegenden Seiten die Ränder (203) der zwei Filterelemente (20), die zueinander benachbart sind, anliegen.

9. Dunstabzugsvorrichtung nach einem der Ansprüche 1 bis 8, **dadurch gekennzeichnet, dass** der Halterahmen (21) einteilig ausgebildet ist.

10. Dunstabzugsvorrichtung nach einem der Ansprüche 1 bis 9, **dadurch gekennzeichnet, dass** zumindest ein Filterelement (20) ein Stützelement (202) aufweist, das sich in Längsrichtung des Filterelementes (20) in dessen Inneren erstreckt.

11. Dunstabzugsvorrichtung nach einem der Ansprüche 1 bis 10, **dadurch gekennzeichnet, dass** das Dunstabzugsgehäuse (10) sich von der Ansaugöffnung (100) zumindest bereichsweise nach unten aufweitet und die Filtervorrichtung (2) zumindest bereichsweise in dem aufgeweiteten Bereich (101) liegt.

12. Dunstabzugsvorrichtung nach einem der Ansprüche 1 bis 11, **dadurch gekennzeichnet, dass** die Ansaugöffnung (100) einen rechteckigen, länglichen Querschnitt aufweist und vorzugsweise eine Breite von 150mm aufweist.

## Claims

1. Fume extraction device which has a fume extraction housing (10) with a suction opening (100) in the upper face of the fume extraction housing (10) and a fan which is arranged offset downward relative to the suction opening (100), wherein the fume extraction device has a filter device for the fume extraction device (1) which comprises at least two filter elements (20) and at least one holding frame (21) for holding the at least two filter elements (20), wherein the at least two filter elements (20) are arranged at an angle relative to one another and an edge (203) of one of the filter elements (20) lies adjacent to an edge (203) of the other filter element (20) and wherein the filter device (2) is introduced in the fume extraction housing (10) such that the edges (203) of the filter elements (20) which lie adjacent to one another face away from the suction opening (100), **characterised in that** each filter element (20) has a variable distance (A) between the opposite outer faces (200, 201) of the filter element (20) over its surface.

2. Fume extraction device according to claim 1, **characterised in that** the edges (203) of the two filter elements (20), which lie adjacent to one another, abut one another.

3. Fume extraction device according to one of claims 1 or 2, **characterised in that** the two filter elements (20) are at an angle (α) of less than 90° and preferably less than 40° relative to one another.

4. Fume extraction device according to one of claims 1 to 3, **characterised in that** the distance (A) between the outer faces (200, 201) of a filter element (20) from one edge (203) of the filter element (20) in the direction of the opposite edge (204) increases from a minimum to a maximum and to the other edge (204) decreases from the maximum to the minimum and preferably that the filter element (20) has a diamond-shaped cross-section.

5. Fume extraction device according to one of claims 1 to 4, **characterised in that** the holding frame (21) has two end walls (213, 214) which abut end faces of the at least two filter elements (20), and rails (210, 211, 212) of the holding frame (21) run between the end walls (213, 214).

6. Fume extraction device according to claim 5, **characterised in that** on the side of each of the end walls (213, 214) facing the rails (210, 211, 212), a handle (216) is formed which extends in the longitudinal direction of the rails (210, 211, 212).

7. Fume extraction device according to one of claims 5 or 6, **characterised in that** the holding frame (21) has a first rail (210) in which the edges (203) of the at least two filter elements (20) which lie adjacent to one another are held, and two second rails (211, 212) in which the opposite spaced-apart edges (204) of the two filter elements (20) are held.

8. Fume extraction device according to claim 7, **characterised in that** the first rail (210) has a web (2100) running in the longitudinal direction, which the edges (203) of the two filter elements (20) lying adjacent to one another abut on opposite sides.

9. Fume extraction device according to one of claims 1 to 8, **characterised in that** the holding frame (21) is formed in one piece.

10. Fume extraction device according to one of claims 1 to 9, **characterised in that** at least one filter element (20) has a support element (202) which extends in the longitudinal direction of the filter element (20) in its interior.

11. Fume extraction device according to one of claims 1 to 10, **characterised in that** the fume extraction housing (10) enlarges downward from the suction opening (100) at least in some areas and the filter device (2) is located at least in some areas in the enlarged area (101).

12. Fume extraction device according to one of claims 1 to 11, **characterised in that** the suction opening (100) has a rectangular, elongated cross-section and preferably has a width of 150 mm.

## Revendications

1. Dispositif d'évacuation de fumée, lequel comprend un boîtier d'évacuation de fumée (10) avec une ouverture d'aspiration (100) dans la face supérieure du boîtier d'évacuation de fumée (10) et un souffleur, lequel est disposé de manière décalée vers le bas par rapport à l'ouverture d'aspiration (100),
le dispositif d'évacuation de fumée présentant un dispositif de filtrage pour le dispositif d'évacuation de fumée (1) qui comprend au moins deux éléments filtrants (20) et au moins un cadre de maintien (21) pour le maintien des au moins deux éléments filtrants (20), dans lequel les au moins deux éléments filtrants (20) sont disposés inclinés l'un vers l'autre et un bord (203) de l'un des éléments filtrants (20) est adjacent à un bord (203) de l'autre élément filtrant (20) et dans lequel le dispositif de filtrage (2) est introduit dans le boîtier d'évacuation de fumée (10) de telle sorte que les bords (203) des éléments filtrants (20) qui sont adjacents l'un à l'autre soient opposés à l'ouverture d'aspiration (100),
**caractérisé en ce que**
chaque élément filtrant (20) présente au long de sa surface une distance (A) variable entre les faces externes (200, 201) opposées de l'élément filtrant (20).

2. Dispositif d'évacuation de fumée selon la revendication 1, **caractérisé en ce que** les bords (203) des deux éléments filtrants (20) qui sont adjacents l'un à l'autre sont en appui l'un sur l'autre.

3. Dispositif d'évacuation de fumée selon l'une des revendications 1 ou 2, **caractérisé en ce que** les deux éléments filtrants (20) forment un angle (α) inférieur à 90° et de préférence inférieur à 40°.

4. Dispositif d'évacuation de fumée selon l'une des revendications 1 à 3, **caractérisé en ce que** la distance (A) entre les faces externes (200, 201) d'un élément filtrant (20) augmente à partir d'un bord (203) de l'élément filtrant (20) en direction du bord (204) opposé depuis un minimum jusqu'à un maximum et diminue vers l'autre bord (204) depuis le maximum jusqu'au minimum et de préférence, **en ce que** l'élément filtrant (20) présente une section transversale en forme de losange.

5. Dispositif d'évacuation de fumée selon l'une des revendications 1 à 4, **caractérisé en ce que** le cadre de maintien (21) présente deux parois frontales (213, 214), lesquelles sont en appui sur les faces frontales des au moins deux éléments filtrants (20), et des rails (210, 211, 212) du cadre de maintien (21) s'étendent entre les parois frontales (213, 214).

6. Dispositif d'évacuation de fumée selon la revendication 5, **caractérisé en ce que**, sur la face de chacune des parois frontales (213, 214) qui est tournée vers les rails (210, 211, 212), est constituée une poignée (216) qui s'étend dans la direction longitudinale des rails (210, 211, 212).

7. Dispositif d'évacuation de fumée selon l'une des revendications 5 ou 6, **caractérisé en ce que** le cadre de maintien (21) présente un premier rail (210), dans lequel sont maintenus les bords (203) des au moins deux éléments filtrants (20) qui sont adjacents l'un à l'autre, et présente deux deuxièmes rails (211, 212), dans lesquels sont maintenus les bords (204) opposés écartés l'un de l'autre des deux éléments filtrants (20).

8. Dispositif d'évacuation de fumée selon la revendication 7, **caractérisé en ce que** le premier rail (210) présente un élément d'écartement (2100) s'étendant dans la direction longitudinale, sur lequel sont en appui, sur des faces opposées, les bords (203) des deux éléments filtrants (20) qui sont adjacents l'un à l'autre.

9. Dispositif d'évacuation de fumée selon l'une des revendications 1 à 8, **caractérisé en ce que** le cadre de maintien (21) est réalisé en une seule pièce.

10. Dispositif d'évacuation de fumée selon l'une des revendications 1 à 9, **caractérisé en ce qu'**au moins un élément filtrant (20) présente un élément de support (202), lequel s'étend dans la direction longitudinale de l'élément filtrant (20) à l'intérieur de celui-ci.

11. Dispositif d'évacuation de fumée selon l'une des revendications 1 à 10, **caractérisé en ce que** le boîtier d'évacuation de fumée (10) s'élargit au moins par endroits vers le bas à partir de l'ouverture d'aspiration (100) et le dispositif de filtrage (2) se situe au moins par endroits dans la zone élargie (101).

12. Dispositif d'évacuation de fumée selon l'une des revendications 1 à 11, **caractérisé en ce que** l'ouverture d'aspiration (100) présente une section transversale rectangulaire allongée et de préférence une largeur de 150 mm.
